# NEUE EUROPÄISCHE PATENTSCHRIFT

(11) **EP 0 820 688 B2**
(45) Veröffentlichungstag und Bekanntmachung des Hinweises auf die Entscheidung über den Einspruch: **25.07.2007**
(45) Hinweis auf die Patenterteilung: 12.12.2001
(21) Anmeldenummer: 97110720.6
(22) Anmeldetag: 01.07.1997
(51) Int. Cl.: A01B 63/10, A01B 63/32

(54) **Vorrichtung zur Ansteuerung mindestens eines Stellorgans eines Arbeitsfahrzeuges**
Device for controlling at least one actuator of a utility vehicle
Dispositif pour le contrôle au minimum d'un actionneur d'un véhicule utilitaire

(30) Priorität: 27.07.1996 DE 19630419
(43) Veröffentlichungstag der Anmeldung: 28.01.1998
(73) Patentinhaber: CLAAS KGaA, 33428 Harsewinkel (DE)
(72) Erfinder: Hagen, Adam, Dr., 33332 Gütersloh (DE)

(56) Entgegenhaltungen:
- EP-A- 0 448 718
- EP-A- 0 494 516
- EP-A- 0 697 303
- DE-A- 4 143 140
- US-A- 4 932 463
- US-A- 4 934 463
- US-A- 5 050 771
- US-A- 5 188 502
- US-A- 5 359 517
- Artikel von W. Friedrichsen und J. Möller, "Neue Entwicklingen und Tendenzen der Hydraulik in Landmaschinen und Ackerschleppern", in Ölhydraulik und Pneumatik, 1990, Nr.3, Seiten 148 bis 160
- Bedienungsanleitung "Elektronische Pflugsteuerung, System EPS II" der Firma Weber-Hydraulik

## Beschreibung

Die Erfindung betrifft eine Vorrichtung zur Ansteuerung mindestens eines Stellorgans eines Arbeitsfahrzeugs, insbesondere eines Ackerschleppers, nach dem Oberbegriff des Patentanspruchs 1.

Aus der DE 34 40 625 C2 ist eine Vorrichtung zur Ansteuerung mindestens eines Stellorgans eines Arbeitsfahrzeugs mit einer elektronischen Steuereinheit bekannt, die das Wendemanöver des Arbeitsfahrzeugs durch automatisches Anheben bzw. Absenken der Stellorgane steuert. Die Steuereinheit weist eine Reihe von Zeitgebern auf, die das aufeinanderfolgende Verstellen der Stellorgane in einer fest vorgegebenen Zeitfolge verursachen. Nachteilig an dieser Vorrichtung ist, daß die Anwendung der Vorrichtung auf den Wendevorgang beschränkt ist und daß die Bedienperson während der Fahrt im Arbeitsfahrzeug keinen Einfluß auf die Abfolge der Stellfunktionen nehmen kann.

Aus der DE 44 28 824 A1 ist eine Vorrichtung zur Ansteuerung mindestens eines Stell-organs bekannt, die eine Steuereinheit umfaßt mit einer Reihe von Stellfunktionen, die nach einem fest vorgegebenen Programm ablaufen. Durch Betätigen eines Automatikschalters wird die Steuereinheit auf Bereitschaft geschaltet. Mit Betätigen eines weiteren Bedienschalters wird das Programm gestartet, so daß anschließend eine Folge von Steuerfunktionen durch die Stellorgane abgearbeitet werden. Beispielsweise wird nach dem Betätigen des Bedienschalters das Hubwerk aus der Arbeitsposition in die Transportposition gebracht und gleichzeitig die Differentialsperre ausgeschaltet. Es folgt die Verstellung weiterer Stellorgane, bis das Arbeitsfahrzeug in den Aushubzustand übergegangen ist. Auch diese Vorrichtung weist den Nachteil auf, daß die Bedienperson keinen Einfluß nehmen kann auf die Abfolge der Steuerfunktionen.

Es ist daher Aufgabe der Erfindung, eine Vorrichtung zur Ansteuerung mindestens eines Stellorgans eines Arbeitsfahrzeugs derart weiter auszubilden, daß die vorgenannten Nachteile vermieden und der Bedienkomfort für die Bedienperson erhöht wird, ohne daß Fehlfunktionen auftreten können.

Die Erfindung ermöglicht, daß eine Bedienperson in die Lage versetzt wird, durch Bedienung eines Bedienelements beliebige Stellfunktionen in einer gewünschten Reihenfolge automatisch ausführen zu lassen. Die Bedienperson braucht lediglich in einem ersten Arbeitsablauf als Eingabeablauf die von ihm gewählte Bedienelementfolge manuell betätigen, die darauf folgend nach Aktivierung durch Betätigung eines Automatikelements automatisch abläuft. Auf diese Weise wird eine an den individuellen Bedürfnissen der Bedienperson angepaßte Automatisierung der Steuerungsabläufe verwirklicht. Vorteilhafterweise kann so den Erfordernissen der Feldbearbeitung in Abhängigkeit von den klimatischen Bedingungen durch zusätzliche Beaufschlagung bzw. Ansteuerung eines Stellorgans Rechnung getragen werden.

Der Steuereinheit ist eine Bedieneinheit zugeordnet, die Eingabeschalter zum Starten des Eingabeablaufs, Automatikschalter zum Abrufen bzw. Starten des Automatikablaufs und Rücksetzschalter zum Löschen des Automatikablaufs aufweist. Damit mehrere Automatikabläufe gespeichert und abrufbar sind, weist die Bedieneinheit mehrere, jeweils zueinander korrespondierende Eingabe-, Automatik- und Rücksetzschalter auf.

In Weiterbildung der Erfindung ist der Steuereinheit eine Anzeigeeinheit zugeordnet, die die abzuspeichernden bzw. abgespeicherten Stellfunktionen visualisiert und damit der Bedienperson eine Kontrolle über die ablaufenden Stellfunktionen gibt.

Nach einer Ausgestaltung der Erfindung ist die Steuereinheit mit der Bedieneinheit und der Anzeigeeinheit in einer gemeinsamen Baueinheit integriert. Vorteilhafterweise ist die Baueinheit abnehmbar von dem Cockpit des Arbeitsfahrzeugs ausgebildet, so daß sie nach der "plug-and-play-Technik" bei entsprechender Programmierung in mehreren Arbeitsfahrzeugen einsetzbar ist. Vorteilhafterweise ist die Steuereinheit über ein Bussystem mit den im Arbeitsfahrzeug fest installierten Bedienelementen verbunden, so daß diese in dem Eingabeablauf in einer für die Bedienperson gewohnten Weise betätigbar sind.

Nach einer Ausgestaltung der Erfindung kann die Bedienperson auch über die zeitliche Abfolge der Steuerfunktionen bestimmen. Dadurch, daß die Zeitintervalle zwischen den einzelnen betätigten Bedienelementen im Eingabeablauf erfaßt und gespeichert werden, kann beispielsweise der Wendevorgang weitgehend automatisiert werden.

Weitere Vorteile der Erfindung sind in den weiteren Unteransprüchen angegeben.

Ausführungsbeispiele der Erfindung werden nachfolgend anhand der Zeichnungen näher erläutert.

Es zeigen:
- Fig. 1: eine Seitenansicht eines Arbeitsfahrzeugs mit am Heck angebrachten Hebeorganen,
- Fig. 2: ein Blockschaltbild der erfindungsgemäßen Vorrichtung,
- Fig. 3: ein Flußdiagramm eines selbsttätig lenkenden Arbeitsfahrzeugs beim Wendevorgang und
- Fig. 4: ein Flußdiagramm eines Eingabeablaufs für ein Wendemanöver eines Arbeitsfahrzeugs mit einem angeschlossenen Pflug.

Die Erfindung findet Anwendung bei in der Landwirtschaft eingesetzten Arbeitsfahrzeugen, wie z. B. bei Ackerschleppern mit angeschlossenen Huborganen oder bei selbstfahrenden Erntemaschinen, wie beispielsweise bei Rüben- oder Kartoffelerntemaschinen sowie Feldhäckslern.

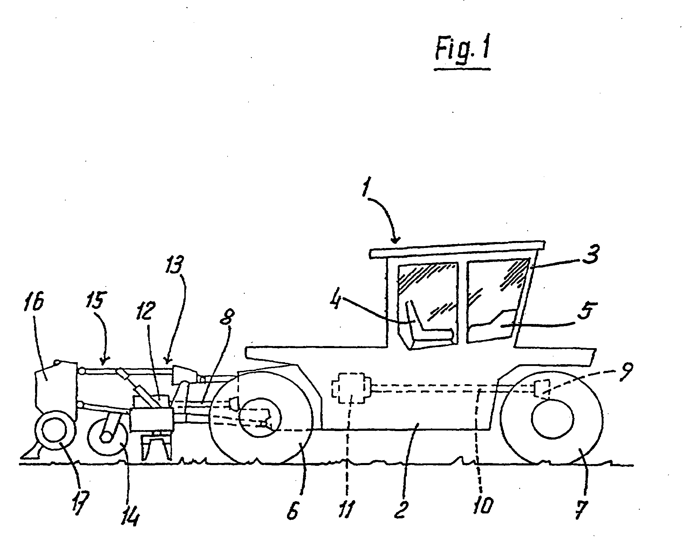

Die Fig. 1 zeigt einen Ackerschlepper 1 mit einem Fahrgestell 2 und einer sich von diesem nach oben hin erstreckenden Fahrerkabine 3. In der Fahrerkabine 3 ist ein Sitz 4 für die Bedienperson sowie ein Cockpit 5 mit nicht gezeigten Bedienelementen zum Betätigen des Antriebs bzw. der Stellorgane angeordnet. Ein nicht dargestellter Antrieb ist in einem Teil des Fahrgestells 2 zwischen Hinterrädern 6 und Vorderrädern 7 angeordnet. Der Antriebsmotor dient zum Antreiben der Hinterräder 6 und der Vorderräder 7 einerseits und zum Antrieb einer hinteren Zapfwelle 8 und einer nicht dargestellten vorderen Zapfwelle.

Zum Anschluß der vorderen Zapfwelle ist ein Zapfwellenanschluß 9 mit einem eine Welle aufweisenden Führungsrohr 10 vorgesehen, das von dem Antriebsmotor über ein Getriebe 11 antreibbar ist. Die hintere Zapfwelle 8 ist ebenfalls über ein Getriebe 12 mit dem Antriebsmotor verbunden. An der Zapfwelle 8 ist eine Kreuzgelenkwelle angelenkt, über die eine Kreiselegge 13 angeschlossen ist. Hinter der Kreiselegge 13 ist eine Nachlaufwalze 14 angeordnet, mit der die Arbeitstiefe der Kreiselegge 13 eingestellt werden kann. Die Kreiselegge 13 ist rückseitig mit weiteren Huborganen 15 ausgestattet, an die, wie aus Fig. 1 zu ersehen ist, eine Sähmaschine 16 mit abstützenden Laufrädern 17 angelenkt ist. Der Ackerschlepper 1 weist eine Autopilot-Funktion auf, die es ermöglicht, daß der Ackerschlepper 1 von einem Feldende zum anderen Feldende ohne Einflußnahme durch die Bedienperson selbsttätig fahrend und lenkend gesteuert wird. Zu diesem Zweck ist der Ackerschlepper 1 mit einer Allradlenkung ausgestattet.

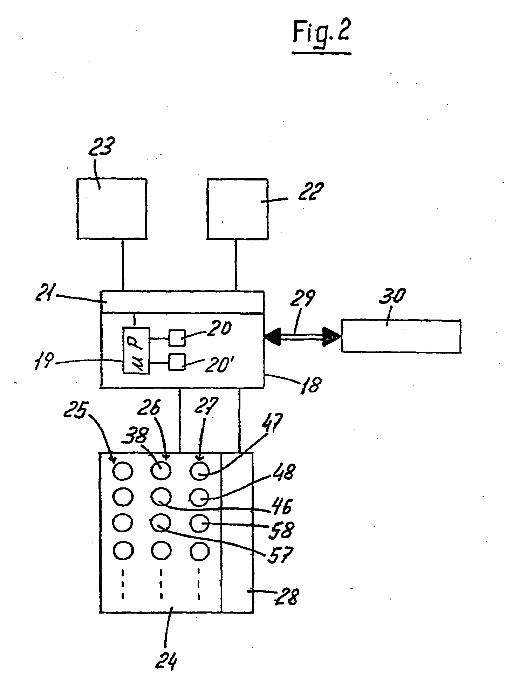

Zur Erhöhung des Bedienungskomforts weist der Ackerschlepper 1 im Bereich seines Cockpits 5 eine in Fig. 2 dargestellte Vorrichtung zur Ansteuerung von Stellorganen auf. Die Vorrichtung umfaßt eine Steuereinheit 18 mit einem Mikroprozessor 19, einem Schreib-Lese-Speicher 20 (RAM), einem Nur-Lese-Speicher 20' (ROM) sowie einer Schnittstelle 21. Über die Schnittstelle 21 ist die Steuereinheit 18 zum einen mit einer Regeleinheit 22 verbunden, die als elektrohydraulische Hubwerksregelung Hydraulikzylinder ansteuert zum Heben bzw. Absenken von Huborganen. Das Huborgan kann beispielsweise gemäß Fig. 1 als Kreiselegge 13 oder als Pflug ausgebildet sein. Zum zweiten ist die Steuereinheit 18 mit einer Kupplungseinheit 23 verbunden, die eine Mehrzahl von Arbeitskupplungen aufweist zur Verbindung mit weiteren Stellorganen. Weiterhin ist die Steuereinheit 18 elektrisch mit einer Bedieneinheit 24 verbunden, die eine Reihe von Eingabetasten 25, eine Reihe von Automatiktasten 26 und eine Reihe von Rücksetztasten 27 aufweist. Die Steuereinheit 18 gibt Stellsignale an die Regeleinheit 22 oder die Kupplungseinheit 23 ab, so daß entsprechende Stellorgane als Stellglieder oder Aktoren angesteuert werden. Darüber hinaus ist die Steuereinheit mit einer Anzeigeeinheit 28 verbunden, die ein LC-Display aufweist zur Anzeige von steuerungsrelevanten Daten. Ferner ist die Steuereinheit 18 über ein Bussystem 29 mit einer Cockpit-Bedieneinheit 30 elektrisch verbunden. Das Bussystem 29 ist vorzugsweise als CAN-Bus oder als LBS-Bus ausgebildet. Die Cockpit-Bedieneinheit 30 umfaßt alle fest im Cockpit 5 angebrachten Bedienelemente.
Die Steuereinheit 18 ist mit der Bedieneinheit 24 und der Anzeigeeinheit 28 in einer gemeinsamen Baueinheit integriert aufgebaut. Sie weist eine Steckeinrichtung auf, die ein einfaches Anschließen der Baueinheit innerhalb des Cockpits 5 ermöglicht. Darüber hinaus ist die Steuereinheit 18 frei programmierbar ausgestaltet, so daß sie an jedes Arbeitfahrzeug mit einem entsprechenden Anschluß, insbesondere einen Bus-Anschluß, angeschlossen werden kann.

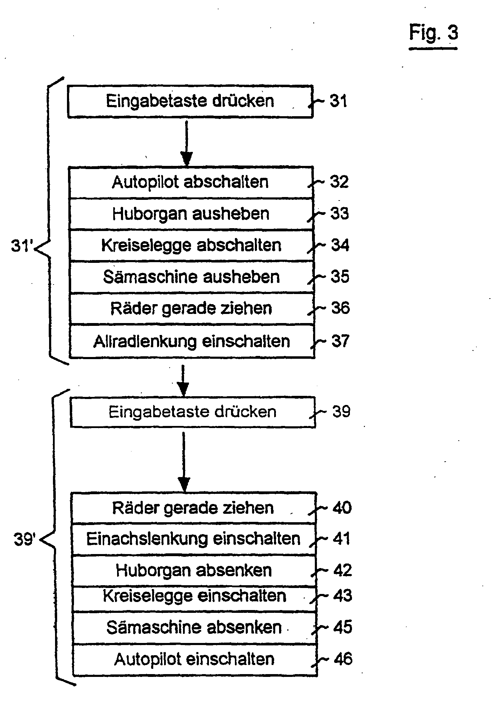

Die in Fig. 2 dargestellte Vorrichtung ermöglicht die Automatisierung der in Fig. 3 dargestellten Steuerungsabläufe. Dazu ist es notwendig, daß die Bedienperson bei einem ersten Arbeitsablauf entsprechend des Eingabeablaufplans nach Fig. 3 die entsprechenden Bedientasten zur Ansteuerung der jeweiligen Stellorgane betätigt. Der Eingabeablauf 31' beginnt mit dem Betätigen der Eingabetaste 31. Diese bewirkt, daß durch die Betätigung nachfolgender Bedientasten Steuersignale über das Bussystem 29 an die Steuereinheit 18 abgegeben werden und in codierter Form in einem Speicherbereich des RAM-Speichers 20 abgelegt werden.

Zur Einleitung eines Wendevorgangs des in Fig. 1 beschriebenen Ackerschleppers 1 kann die Bedienperson gemäß Fig. 3 vorsehen, daß nachfolgend das Bedienelement "Autopilot abschalten" 32, das Bedienelement für "Huborgan ausheben" 33, "Kreiselegge abschalten" 34, "Sämaschine ausheben" 35, "Räder geradeziehen" 36 und abschließend "Allradlenkung einschalten" 37 nacheinander betätigt werden. Diese Stellfunktionen werden der Automatiktaste 38 zugeordnet und können durch Betätigung dieser Taste 38 automatisch aktiviert werden.

Nach Beendigung des Wendevorgangs wird innerhalb eines Eingabeablaufs 39' die Eingabetaste 39 betätigt. Nachfolgend werden folgende Bedienelemente aufeinanderfolgend betätigt, um in die Arbeitsstellung zurückzukehren. Als erstes wird das Bedienelement "Räder geradeziehen" 40 betätigt, anschließend das Bedienelement Einachslenkung einschalten" 41, "Huborgan absenken" 42, "Kreiselegge einschalten" 43, "Sämaschine absenken" 44 und "Autopilot einschalten" 45 betätigt. Diese Steuerfunktionen werden einer Automatiktaste 46 zugeordnet, so daß nach Betätigen der Automatiktaste 46 diese Steuerungsfunktionen aufeinanderfolgend automatisch ausgeführt werden.

Jedem Steuerungsablauf ist eine Rücksetztaste 47, die zu der Automatiktaste 38 korrespondiert, sowie eine Rücksetztaste 48, die zu der Automatiktaste 46 korrespondiert, zugeordnet. Bei Betätigung der Rücksetztasten 47, 48 wird der die jeweiligen Eingabeabläufe 31', 39' zugeordnete Speicherbereich des Speichers 20 zurückgesetzt, so daß über die Eingabetasten 31, 39 neue, veränderte Eingabeabläufe abgespeichert werden können.

Gemäß Fig. 2 sind vier Steuerungsabläufe abspeicherbar. Alternativ dazu können aber auch mehrere Reihen von jeweils zueinander korrespondierenden Eingabetasten, Automatiktasten bzw. Rücksetztasten angeordnet sein. Der Steuerungsablauf wird jedoch beendet, sobald die Bedienperson ein an dem Cockpit 5 fest angeordnetes Bedienelement betätigt. Die Bedienperson kann dann die Steuerung manuell fortsetzen.

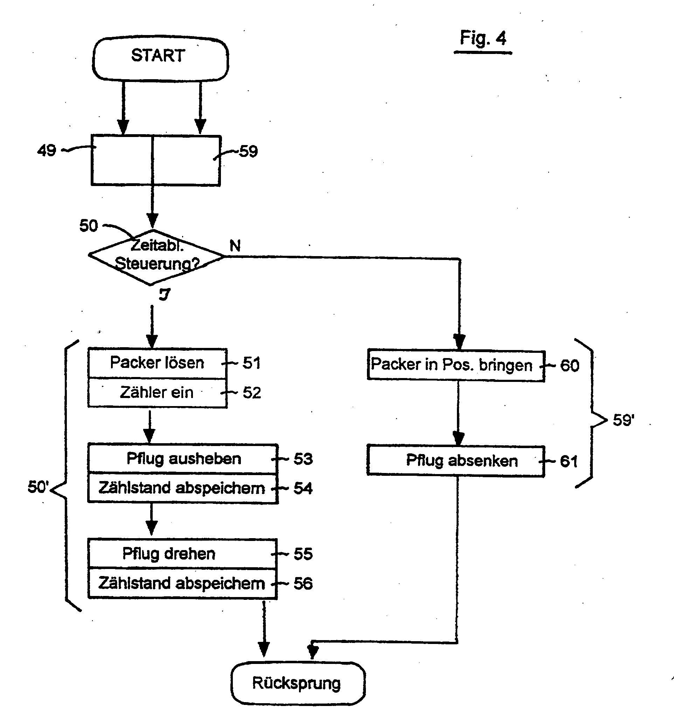

Nach einem weiteren Ausführungsbeispiel gemäß Fig. 4 kann der Wendevorgang eines Ackerschleppers auch in einer zeitlichen Abfolge automatisiert werden. Zu diesem Zweck weist die Steuereinheit 18 einen Zähler auf, der zur Bestimmung der Zeitdauer zwischen zwei betätigten Bedienelementen dient. Der Zähler kann als elektrische Baueinheit mit Kippgliedern ausgebildet sein. Alternativ kann der Zähler auch durch ein in einem ROM-Speicher 20' der Steuereinheit 18 abgespeichertes Programm verwirklicht werden.

Nach Betätigen der Eingabetaste 49 wird über die Anzeigeeinheit 28 abgefragt, ob eine zeitabhängige Eingabe 50 gewünscht wird. Bestätigt die Bedienperson diese Abfrage, wird nach Beginn des folgenden Eingabeablaufs 50' mit der Betätigung des Bedienelements "Packer lösen" 51 der "Zähler eingeschaltet" 52, so daß dieser beispielsweise vorwärts zählt, bis mit Betätigen des weiteren Bedienelements "Pflug ausheben" 53 der sich zu diesem Zeitpunkt ergebende Zählerstand 54 in der Speichereinheit 20 abgespeichert wird. Bei nachfolgender Betätigung des Bedienelements "Pflug drehen" 54 wird der nächste. Zählerstand ermittelt, die Differenz zum vorherigen Zählerstand berechnet und dieser Wert 56 dann im RAM-Speicher 20 abgespeichert. Damit ist der Eingabeablauf 50' beendet. Dieser ist einer Automatiktaste 57 zugeordnet, mittels der der abgespeicherte Eingabeablauf 50' aktiviert werden kann. Eine korrespondierende Rücksetztaste 58 führt nach Betätigen derselben zum Rücksetzen des entsprechenden Speicherbereichs des Speichers 20. Auf diese Weise wird ermöglicht, daß bei nachfolgenden, durch die Automatiktaste aktivierten Steuerungsabläufen auch die zeitliche Abfolge berücksichtigt wird und diese in der von der Bedienperson gewünschten Weise die entsprechenden Steuerorgane aktiviert werden. Wird die zeitabhängige Steuerung verneint, lassen sich die gleichen Steuerorgane ohne Abfrage des Zählerstands betätigen.

Nachfolgend erfolgt der Rücksprung, so daß zu einem gewünschten Zeitpunkt der zweite Eingabeablauf durch Betätigen einer Eingabetaste 59 beginnen kann. Nach der Abfrage, ob eine zeitabhängige Steuerung gewünscht wird, wird durch Betätigen der Bedientaste "Packer in Position bringen" 60 und "Pflug absenken" 61 der zweite Eingabeablauf 59' abgeschlossen.

Alternativ dazu kann in dem RAM-Speicher 20 auch ein Plausibilitätsprogramm abgespeichert sein, das nach Betätigung jedes Bedienelements innerhalb des Eingabeablaufs 50', 59' überprüft, ob Bedienelemente in der richtigen Reihenfolge betätigt worden sind oder ob die Betätigung eines notwendigen Bedienelements von der Bedienperson vergessen worden ist. Beispielsweise kann das Plausibilitätsprogramm überprüfen, ob gemäß dem Ablaufplan nach Fig. 3 mit Beginn des Wendevorgangs der Autopilot abgeschaltet worden ist oder nicht. Wurde die Abschaltung von der Bedienperson vergessen, kann durch eine entsprechende Anzeige in der Anzeigeeinheit 28 bzw. durch eine Warnleuchte darauf aufmerksam gemacht und/oder das weitere Betätigen der Bedientasten automatisch blockiert werden.

Die Steuereinheit 18 ist ferner geeignet, Grundeinstellungen der Regeleinheit 22, wie z.B. Daten über die Menge des Hydraulikfluids bzw. Stellung der Drossel, abzuspeichern und für den entsprechenden Steuerungsablauf zur Verfügung zu stellen. Außerdem kann die Steuerung dadurch erweitert werden, daß Antriebstrangsteuerungen und -regelungen unter Einbeziehung der Umschaltung von Motorkennlinien oder der Änderung von Fahrzeugstrategien abgespeichert werden und im Rahmen des Steuerungsprogramms berücksichtigt werden. Darüber hinaus kann auch eine Fahrzeug-Lenkungseinheit vorgesehen sein, die mit der Steuereinheit 18 verbunden ist, so daß auch die Lenkung mehrachsig gelenkter Fahrzeuge automatisch gesteuert werden kann.

## Patentansprüche

1. Vorrichtung zur Ansteuerung von Stellorganen eines Arbeitsfahrzeugs, insbesondere für einen Ackerschlepper, mit einer Steuereinheit, die mit den Stellorganen und Bedienelementen elektrisch verbindbar ist, wobei des Bedienelement zum Betätigen einer in der Steuereinheit verarbeitenden Steuerfunktion dient,
**dadurch gekennzeichnet,**
**dass** die Steuereinheit (18) Mittel aufweist, derart, dass in Abhängigkeit von einer durch die Bedienperson durch Aktivierung von den Bedienelementen (31-37, 39, 40-46, 51-56) vorgebbaren Reihenfolge eine Vielzahl beliebiger Stellfunktionen als Stellsignale an die entsprechenden Stellorgane zuführbar sind und wobei die Reihenfolge der Stellfunktionen durch die Bedienperson frei wählbar ist und die vorgebbare Reihenfolge der Stellfunktionen in der Steuereinheit (18) als Steuerungsablauf (32-37, 40-45, 50/50', 50/59') abspeicherbar ist und wiederholt abgerufen werden kann und wobei in der Steuereinheit (18) eine Vielzahl von Steuerungsabläufen (32-37, 40-45, 50/50', 50/59') abspeicherbar sind und zur Aufzeichnung eines Steuerungsablaufs (32-37, 40-45, 50/50', 50/59') jedem Steuerungsablauf (32-37, 40-45, 50/50', 50/59') eine Eingabetaste (25, 31, 39, 49, 59) zugeordnet ist und jeder Steuerungsablauf (32-37, 40-45, 50/50', 50/59') durch eine dem jeweiligen Steuerungsablauf (32-37, 40-45, 50/50', 50/59') zugeordnete Automatiktaste (26, 38, 46, 57) abrufbar und eine dem jeweiligen Steuerungsablauf (32-37, 40-45, 50/50', 50/59') zugeordnete Rücksetztaste.(27, 47, 48, 58) rücksetzbar ist.

2. Vorrichtung nach Anspruch 1, **dadurch gekennzeichnet, daß** die Steuereinheit (18) einen Mikroprozessor (19) aufweist und einen Schreib-LeseSpeicher (20) zur Speicherung von den durch Betätigen der Bedienelemente erzeugten Stellfunktionen.

3. Vorrichtung nach Anspruch 1 oder 2, **dadurch gekennzeichnet, daß** der Steuereinheit (18) eine Bedieneinheit (24) zugeordnet ist, die die Eingabe-, die Automatik- und die Rücksetztasten umfasst.

4. Vorrichtung nach einem oder mehreren der Ansprüche 1 bis 3, **dadurch gekennzeichnet, daß** in der Steuereinheit (18) die Bedieneinheit (24) und/oder eine Anzeigeeinheit (28) integriert ist.

5. Vorrichtung nach Anspruch 4, **dadurch gekennzeichnet, daß** die Anzeigeeinheit (28) ein LC-Display aufweist zur Anzeige der eingegebenen Stellfunktionsdaten.

6. Vorrichtung nach einem oder mehreren der Ansprüche 1 bis 5, **dadurch gekennzeichnet, daß** die Steuereinheit (18) Mittel aufweist, so daß die Steuereinheit (18) von dem Cockpit (5) abnehmbar ausgebildet ist.

7. Vorrichtung nach einem oder mehreren der Ansprüche 1 bis 6, **dadurch gekennzeichnet, daß** die Steuereinheit (18) eine Steckeinrichtung aufweist mit in dieser zusammenlaufenden Leitungen für die Daten- und Adreßübertragung sowie für die Stromversorgung der Steuereinheit (18) und daß die Steckvorrichtung in eine korrespondierende Aufnahmeeinrichtung des Cockpits (5) einsteckbar ist.

8. Vorrichtung nach Anspruch 7, **dadurch gekennzeichnet, daß** die Steuereinheit (18) über die Steckeinrichtung an ein Bussystem (29) des Arbeitsfahzeugs (1) anschließbar ist, derart, daß die Daten von den fest im Cockpit (5) angebrachten Bedienelementen an die Steuereinheit (18) übertragbar sind.

9. Vorrichtung nach einem oder mehreren der Ansprüche 1 bis 8, **dadurch gekennzeichnet, daß** die Steuereinheit (18) mit einer Regeleinheit (22), insbesondere mit einer elektrohydraulischen Hubwerks-Regeleinheit, verbunden ist.

10. Vorrichtung nach einem oder mehreren der Ansprüche 1 bis 9, **dadurch gekennzeichnet, daß** in der Steuereinheit (18) hydraulische Stellfunktionen abspeicherbar sind, die als Stellsignale der Regeleinheit (22) zugeführt werden zur Ansteuerung der Stellorgane.

11. Vorrichtung nach einem oder mehreren der Ansprüche 1 bis 10, **dadurch gekennzeichnet, daß** in der Steuereinheit (18) motorrelevante Daten abspeicherbar sind und daß die Daten als Stellsignale der Regeleinheit (22) zugeführt werden zur Steuerung und/oder Regelung des Antriebsstrangs des Arbeitsfahrzeugs (1).

12. Vorrichtung nach einem oder mehreren der Ansprüche 1 bis 11, **dadurch gekennzeichnet, daß** in der Steuereinheit (18) lenkungsspezifische Daten abspeicherbar sind, die als Stellsignale der Regeleinheit (22) zuführbar sind zur Steuerung und/oder der Regelung der Lenkung des Arbeitsfahrzeugs (1).

13. Vorrichtung nach einem oder mehreren der Ansprüche 1 bis 12, **dadurch gekennzeichnet, daß** die Steuereinheit (18) Mittel zur Erzeugung von Stellsignalen aufweist, so daß in Abhängigkeit von einer durch die Bedienperson vorgegebenen Zeitfolge Stellfunktionen an die entsprechenden Stellorgane zuführbar sind.

14. Vorrichtung nach Anspruch 13, **dadurch gekennzeichnet, daß** die Steuereinheit (18) einen Zähler oder ein Zählprogramm aufweist zur Bestimmung der Zeitdauer zwischen zwei betätigten Bedienelementen.

## Claims

1. Apparatus for actuating actuator members of a working vehicle, in particular for an agricultural tractor, comprising a control unit which can be electrically connected to the actuator members and operating elements, wherein each operating element serves to actuate a control function for processing in the control unit, **characterised in that** the control unit (18) has means such that in dependence on a sequence which can be predetermined by the operator by activation of the operating elements (31-37, 39, 40-46, 51-56) a plurality of any actuation functions can be fed as actuation signals to the corresponding actuator members and wherein the sequence of the actuation functions can be freely selected by the operator and the predeterminable sequence of the actuation functions can be stored in the control unit (18) as a control procedure (32-37, 40-45, 50/50', 50/59') and can be repeatedly called up and wherein a plurality of control procedures (32-37, 40-45, 50/50', 50/59') can be stored in the control unit (18) and an input key (25, 31, 39, 49, 59) is associated with each control procedure (32-37, 40-45, 50/50', 50/59') for recording a control procedure (32-37, 40-45, 50/50', 50/59') and each control procedure (32-37, 40-45, 50/50', 50/59') can be called up by an automatic key (26, 38, 46, 57) associated with the respective control procedure (32-37, 40-45, 50/50', 50/59') and a reset key (27, 47, 48, 58) associated with the respective control procedure (32-37, 40-45, 50/50', 50/59') is resettable.

2. Apparatus according to claim 1 **characterised in that** the control unit (18) has a microprocessor (19) and a random access memory (20) for the storage of the actuation functions produced by actuation of the operating elements.

3. Apparatus according to claim 1 or claim 2 **characterised in that** associated with the control unit (18) is an operating unit (24) which includes the input, automatic and reset keys.

4. Apparatus according to one or more of claims 1 to 3 **characterised in that** the operating unit (24) and/or a display unit (28) is integrated in the control unit (18).

5. Apparatus according to claim 4 **characterised in that** the display unit (28) has an LC-display for display of the inputted actuation function data.

6. Apparatus according to one or more of claims 1 to 5 **characterised in that** the control unit (18) has means so that the control unit (18) is adapted to be removable from the cockpit (5).

7. Apparatus according to one or more of claims 1 to 6 **characterised in that** the control unit (18) has a plug device with lines running together therein for data and address transmission and for the power supply for the control unit (18) and that the plug device can be inserted into a corresponding receiving device in the cockpit (5).

8. Apparatus according to claim 7 **characterised in that** the control unit (18) can be connected by way of the plug device to a bus system (29) of the working vehicle (11) in such a way that the data can be transmitted to the control unit (18) from the operating elements which are fixedly mounted in the cockpit (5).

9. Apparatus according to one or more of claims 1 to 8 **characterised in that** the control unit (18) is connected to a regulating unit (22), in particular to an electrohydraulic lift mechanism regulating unit.

10. Apparatus according to one or more of claims 1 to 8 **characterised in that** hydraulic actuation functions can be stored in the control unit (18), which functions are fed as actuation signals to the regulating unit (22) for actuation of the actuator members.

11. Apparatus according to one or more of claims 1 to 10 **characterised in that** engine-relevant data can be stored in the control unit (18) and that the data are fed as actuation signals to the regulating unit (22) for control and/or regulation of the drive train of the working vehicle (1).

12. Apparatus according to one or more of claims 1 to 11 **characterised in that** steering-specific data can be stored in the control unit (18), which data can be fed as actuation signals to the regulating unit (22) for control and/or regulation of the steering of the working vehicle (1).

13. Apparatus according to one or more of claims 1 to 12 **characterised in that** the control unit (18) has means for producing actuation signals so that actuation functions can be fed to the appropriate actuator members in dependence on a time sequence which is predetermined by the operator.

14. Apparatus according to claim 13 **characterised in that** the control unit (18) has a counter or a counting program for determining the period of time between two actuated operating elements.

## Revendications

1. Dispositif pour la commande d'au moins un actionneur sur un véhicule de travail, en particulier destiné à un tracteur agricole, comportant une unité de commande qui peut être reliée électriquement aux actionneurs et à des éléments de manoeuvre, chaque élément de manoeuvre servant à activer une fonction de commande exécutable à l'intérieur de l'unité de commande, **caractérisé en ce que** l'unité de commande (18) comporte des moyens grâce auxquels, conformément à une séquence qui est prédéterminée par l'utilisateur par actionnement des éléments de manoeuvre (31-37, 39, 40-46, 51-56), une pluralité de fonctions de réglage peuvent être transmises en tant que signaux de réglage aux actionneurs concernés, la séquence des fonctions de réglage pouvant être sélectionnée librement par l'utilisateur et la séquence prédéterminée des fonctions de réglage pouvant être mémorisée et lue dans l'unité de commande (18) en tant que processus de commande (32-37, 40-45, 50/50', 50/59'), une pluralité de processus de commande (32-37, 40-45, 50/50', 50/59') pouvant être mémorisée dans l'unité de commande (18) et une touche d'entrée (25, 31, 39, 49, 59) étant associée à chaque processus de commande (32-37, 40-45, 50/50', 50/59'), et chaque processus de commande (32-37, 40-45, 50/50', 50/59') pouvant être appelé par une touche automatique (26, 38, 46, 57) associée au processus de commande (32-37, 40-45, 50/50', 50/59') concerné et réinitialisé par une touche de réinitialisation (27, 47, 48, 58) associée au processus de commande (32-37, 40-45, 50/50', 50/59') concerné.

2. Dispositif selon la revendication 1, **caractérisé en ce que** l'unité de commande (18) comporte un microprocesseur (19) ainsi qu'une mémoire à écriture-lecture (20) pour mémoriser les fonctions de réglage générées par l'actionnement des éléments de manoeuvre.

3. Dispositif selon la revendication 1 ou 2, **caractérisé en ce qu'**une unité de manoeuvre (24) est associée à l'unité de commande (18) qui comprend les touches d'entré, automatique et de réinitialisation.

4. Dispositif selon un ou plusieurs des revendications 1 à 3, **caractérisé en ce que** l'unité de manoeuvre (24) et/ou une unité d'affichage (28) sont intégrées dans l'unité de commande (18).

5. Dispositif selon la revendication 4, **caractérisé en ce que** l'unité d'affichage (28) comprend un écran à cristaux liquides pour afficher les données de fonctions de réglage entrées.

6. Dispositif selon une ou plusieurs des revendications 1 à 5, **caractérisé en ce que** l'unité de commande (18) comporte des moyens grâce auxquels l'unité de commande (18) peut être retirée de la cabine de conduite (5).

7. Dispositif selon une ou plusieurs des revendications 1 à 6, **caractérisé en ce que** l'unité de commande (18) comporte un dispositif d'enfichage avec des lignes qui convergent vers celui-ci, pour la transmission de données et d'adresse, ainsi que pour l'alimentation en courant de l'unité de commande (18) et **en ce que** le dispositif d'enfichage peut être enfiché dans un dispositif récepteur adapté de la cabine de conduite (5).

8. Dispositif selon la revendication 7, **caractérisé en ce que** l'unité de commande (18) peut être connectée à un système de bus (29) du véhicule utilitaire (1) par l'intermédiaire du dispositif d'enfichage, de telle sorte que les données puissent être transmises des éléments de manoeuvre montés fixes dans la cabine de conduite (5) à l'unité de commande (18).

9. Dispositif selon une ou plusieurs des revendications 1 à 8, **caractérisé en ce que** l'unité de commande (18) est reliée à une unité de réglage (22), en particulier à une unité de réglage électrohydraulique de mécanisme élévateur.

10. Dispositif selon une ou plusieurs des revendications 1 à 9, **caractérisé en ce que** des fonctions de réglage hydrauliques peuvent être mémorisées dans l'unité de commande (18), lesquelles fonctions sont transmises en tant que signaux de réglage à l'unité de réglage (22), aux fins de commander les actionneurs.

11. Dispositif selon une ou plusieurs des revendications 1 à 10, **caractérisé en ce que** des données concernant le moteur peuvent être mémorisées dans l'unité de commande (18) et **en ce que** les données sont transmises en tant que signaux de réglage à l'unité de réglage (22) aux fins de commander et/ou de réguler la chaîne de transmission du véhicule utilitaire (1).

12. Dispositif selon une ou plusieurs des revendications 1 à 11, **caractérisé en ce que** des données concernant la direction peuvent être mémorisées dans l'unité de commande (18), lesquelles données peuvent être transmises en tant que signaux de réglage à l'unité de réglage (22) aux fins de commander et/ou de réguler la direction du véhicule utilitaire (1).

13. Dispositif selon une ou plusieurs des revendications 1 à 12, **caractérisé en ce que** l'unité de commande (18) comporte des moyens pour générer des signaux de réglage, de telle sorte que des fonctions de réglage peuvent être transmises aux actionneurs concernés, en fonction d'une séquence prédéterminée par l'utilisateur.

14. Dispositif selon la revendication 13, **caractérisé en ce que** l'unité de commande (18) comporte un compteur ou un programme de comptage pour déterminer l'intervalle de temps entre deux éléments de manoeuvre actionnés.
